(19) **Europäisches Patentamt / European Patent Office / Office européen des brevets**

(11) **EP 3 729 636 B1**

(12) **FASCICULE DE BREVET EUROPEEN**

(45) Date de publication et mention de la délivrance du brevet:
**04.06.2025 Bulletin 2025/23**

(21) Numéro de dépôt: **18829427.6**

(22) Date de dépôt: **29.11.2018**

(51) Classification Internationale des Brevets (IPC):
*H02P 27/02* (2016.01)  *B60K 6/22* (2007.10)
*H02M 7/48* (2007.01)  *B60K 6/20* (2007.10)
*B60W 10/06* (2006.01)  *B60W 10/08* (2006.01)
*B60W 20/11* (2016.01)

(52) Classification Coopérative des Brevets (CPC):
**H02P 27/02; B60W 10/06; B60W 10/08; B60W 20/11;** B60K 6/20; B60W 2710/083; Y02T 10/62; Y02T 10/70

(86) Numéro de dépôt international:
**PCT/FR2018/053045**

(87) Numéro de publication internationale:
**WO 2019/122565 (27.06.2019 Gazette 2019/26)**

(54) **PROCÉDÉ DE PILOTAGE D'UN DISPOSITIF DE MODULATION DE TENSION UTILISÉ DANS UN GROUPE MOTOPROPULSEUR HYBRIDE DE VÉHICULE AUTOMOBILE**

VERFAHREN ZUR STEUERUNG EINER IN EINEM HYBRIDANTRIEBSSTRANG EINES KRAFTFAHRZEUGS VERWENDETEN SPANNUNGSMODULATIONSVORRICHTUNG

METHOD FOR DRIVING A VOLTAGE MODULATION APPARATUS USED AS POWERTRAIN IN A HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2017 FR 1762356**

(43) Date de publication de la demande:
**28.10.2020 Bulletin 2020/44**

(73) Titulaires:
• **Renault s.a.s**
**92100 Boulogne Billancourt (FR)**
• **Université d'Orléans**
**45067 Orléans (FR)**

(72) Inventeurs:
• **HADJ-SAID, Souad**
**Berkshire (GB)**
• **KETFI-CHERIF, Ahmed**
**78180 Montigny le Bretonneux (FR)**
• **COLIN, Guillaume**
**45160 Olivet (FR)**

(74) Mandataire: **Jacobacci Coralis Harle**
**32, rue de l'Arcade**
**75008 Paris (FR)**

(56) Documents cités:
**EP-A1- 2 849 336      EP-A1- 2 987 673**
**US-A1- 2011 006 723**

**Description**

DOMAINE TECHNIQUE AUQUEL SE RAPPORTE L'INVENTION

La présente invention concerne de manière générale les véhicules automobiles équipés de groupes motopropulseurs hybrides, c'est-à-dire de groupes motopropulseurs comportant une machine électrique et un moteur à combustion interne.

Elle concerne plus particulièrement un procédé de pilotage d'un dispositif de modulation de la tension d'alimentation de la machine électrique d'un tel véhicule automobile.

Elle concerne également un procédé de pilotage du groupe motopropulseur hybride d'un tel véhicule automobile.

ARRIERE-PLAN TECHNOLOGIQUE

Un véhicule automobile hybride comporte une chaîne de traction thermique conventionnelle (avec un moteur à combustion interne, un réservoir de carburant, et une boîte de vitesses) et une chaîne de traction électrique (avec une batterie de traction, un onduleur et une machine électrique).

Lorsqu'il s'agit d'hybridation parallèle, un tel véhicule automobile est susceptible d'être tracté par sa seule chaîne de traction électrique, ou par sa seule chaîne de traction thermique, ou encore simultanément par ses deux chaînes de traction électrique et thermique.

On cherche toujours à minimiser la consommation en courant électrique et en carburant des deux chaînes de traction afin de réduire au mieux les rejets de composants polluants dans l'atmosphère et de garantir au véhicule la meilleure autonomie possible.

Pour atteindre cet objectif, une solution consiste à trouver la tension d'alimentation optimale de l'onduleur, à savoir celle qui minimise les pertes électriques dans la chaîne de traction électrique.

On connaît pour cela du document US8324856 une méthode consistant à déterminer cette tension d'alimentation optimale au moyen d'une cartographie qui associe, à chaque couple et régime de la machine électrique, une valeur de tension. Les documents EP2987673 A1 et EP2849336 A1 divulguent un système d'entraînement électrique véhicule hybride et, plus particulièrement, une méthode optimisée de contrôle du fonctionnement du système de propulsion du véhicule.

La demanderesse a toutefois constaté que cette méthode ne donnait pas toujours des résultats aussi efficaces que souhaité, notamment parce que la discrétisation proposée de la tension d'alimentation n'est pas assez fine. La demanderesse a en effet observé que cette discrétisation ne comporte en pratique que deux niveaux de tension d'alimentation.

OBJET DE L'INVENTION

L'invention est divulguée dans la revendication indépendante 1 jointe.

Afin de remédier à l'inconvénient précité de l'état de la technique, la présente invention propose de calculer la tension d'alimentation optimale de façon analytique.

Plus particulièrement, on propose selon l'invention un procédé de pilotage tel que défini dans l'introduction, dans lequel il est prévu :

- une étape de détermination d'un couple électrique optimal que la machine électrique doit développer, en fonction d'une valeur d'énergie demandée pour propulser le véhicule automobile et d'un facteur d'équivalence associé à la batterie de traction,
- une étape de calcul analytique d'une tension d'alimentation optimale en fonction dudit couple électrique optimal et du régime de la machine électrique, ladite tension d'alimentation optimale minimisant les pertes électriques dans un ensemble comprenant au moins le dispositif de modulation et la machine électrique, et
- une étape de commande dudit dispositif de modulation de façon à ce qu'il délivre ladite tension d'alimentation optimale.

Ainsi, grâce à l'invention, on utilise un modèle analytique dans le but de synthétiser une valeur précise de tension d'alimentation optimale.

L'utilisation d'un tel modèle analytique s'avère ici intéressante pour deux raisons majeures, à savoir la fiabilité des résultats qu'il donne et la facilité de son implémentation sur différentes catégories de véhicules automobiles hybrides.

D'autres avantages de la solution proposée sont les suivants. Ce procédé nécessite une puissance de calcul très faible. Il assure une continuité dans la commande du dispositif de modulation de tension (de façon à éviter toute dégradation de la chaîne de traction électrique et tout à-coup inconfortable pour les passagers du véhicule). Il permet de profiter de l'ensemble des performances du véhicule automobile dans toute situation de conduite.

D'autres caractéristiques avantageuses et non limitatives du procédé de pilotage conforme à l'invention sont les suivantes :

- si le régime est compris entre deux bornes déterminées en fonction dudit couple électrique optimal, ladite tension d'alimentation optimale est calculée en fonction exclusivement dudit couple électrique optimal et du régime de la machine électrique ;
- si le régime est compris entre lesdites deux bornes, ladite tension d'alimentation optimale est calculée selon la formule :

$$U_e^{opt} = u_2(T_e^{opt}).\omega_e^2 + u_1(T_e^{opt}).\omega_e + u_0(T_e^{opt}),$$

où

$U_e^{opt}$ est la tension d'alimentation optimale,
$T_e^{opt}$ est le couple électrique optimal,
$\omega_e$ est le régime de la machine électrique,
$u_0, u_1, u_2$ sont des fonctions prédéterminées ;

- si le régime est inférieur auxdites deux bornes, ladite tension d'alimentation optimale est choisie égale à la tension aux bornes de la batterie de traction ; selon l'invention, si le régime est supérieur auxdites deux bornes, ladite tension d'alimentation optimale est choisie égale à un seuil de tension maximal dont la valeur est une fonction du couple électrique optimal ;
- ledit couple électrique optimal est calculé de façon analytique ;
- ledit couple électrique optimal est calculé selon la formule :

$$T_e^{opt} = P_m^{opt} / \omega_e$$

tels que :

$$P_m^{opt} = (a - \lambda.b_1) / (2.\lambda.b_2)$$

$a = a_1$ si $P_r - P_m^{opt} \leq P_{lim}$ et $a = a_2$ si $P_r - P_m^{opt} > P_{lim}$
$b_1 = b_1^-$ et $b_2 = b_2^-$ si $P_m^{opt} \leq 0$ et $b_1 = b_1^+$ et $b_2 = b_2^+$ si $P_m^{opt} > 0$

et où :

$\lambda$ est le facteur d'équivalence de la batterie de traction,
$\omega_e$ est le régime de la machine électrique,
$P_r$ est la puissance aux roues,
$P_{lim}$ est une variable fonction du régime de la machine électrique,
$a_1, a_2, b_1^-, b_2^-, b_1^+, b_2^+$ sont des constantes prédéterminées ;

- ledit couple électrique optimal et ladite tension électrique optimale minimisent les pertes électriques dans ledit ensemble si un Hamiltonien, qui est fonction d'une consommation en carburant d'un moteur à combustion interne du véhicule automobile et d'une consommation en courant électrique dudit ensemble, est minimisé ;
- ladite valeur d'énergie est une puissance demandée au niveau des roues motrices du véhicule automobile.

L'invention concerne aussi un procédé de calcul d'une consigne de pilotage d'un groupe motopropulseur hybride de véhicule automobile, ledit groupe motopropulseur hybride comportant, d'une part, une machine électrique qui est alimentée en courant par une batterie de traction, un dispositif de modulation de tension et un onduleur, et d'autre part, un moteur à combustion interne qui est alimenté en carburant par un réservoir, ledit procédé comprenant :

- une opération d'acquisition d'une valeur d'énergie demandée pour propulser le véhicule automobile, d'un facteur d'équivalence associé à la batterie de traction, du régime du moteur à combustion interne et du régime de la machine électrique,

- une opération de pilotage du dispositif de modulation selon un procédé tel que précité, au cours duquel on calcule une première puissance que la machine électrique doit développer, en fonction dudit couple électrique optimal et du régime de la machine électrique,
- une opération de calcul d'une seconde puissance que le moteur à combustion interne doit développer, en fonction de la première puissance et de ladite valeur d'énergie, et
- une opération de commande de la machine électrique et du moteur à combustion interne de façon à ce qu'ils développent respectivement les première et seconde puissances.

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une figure schématique d'une chaîne de traction d'un véhicule automobile hybride ;
- la figure 2 est un graphique illustrant les variations de la tension d'alimentation optimale de la machine électrique du véhicule automobile de la figure 1 en fonction du couple électrique développé par cette machine électrique et du régime de cette machine électrique ;
- la figure 3 est un graphique illustrant, pour différents régimes de la machine électrique, les variations de la puissance électrique optimale développée par la batterie électrique en fonction du couple électrique développé par la machine électrique ;
- les figures 4A à 4C sont des graphiques illustrant, pour trois couples électriques différents, les variations de la tension d'alimentation optimale en fonction du régime de la machine électrique ;
- la figure 5 est un graphique illustrant un modèle de la variation de la tension d'alimentation optimale en fonction du régime de la machine électrique, lequel modèle est applicable à tout couple électrique ; et
- la figure 6 est un graphique illustrant les variations de deux bornes de régime de la machine électrique en fonction du couple électrique développé par la machine électrique.

Classiquement, un véhicule automobile comporte un châssis qui supporte notamment un groupe motopropulseur, des éléments de carrosserie et des éléments d'habitacle.

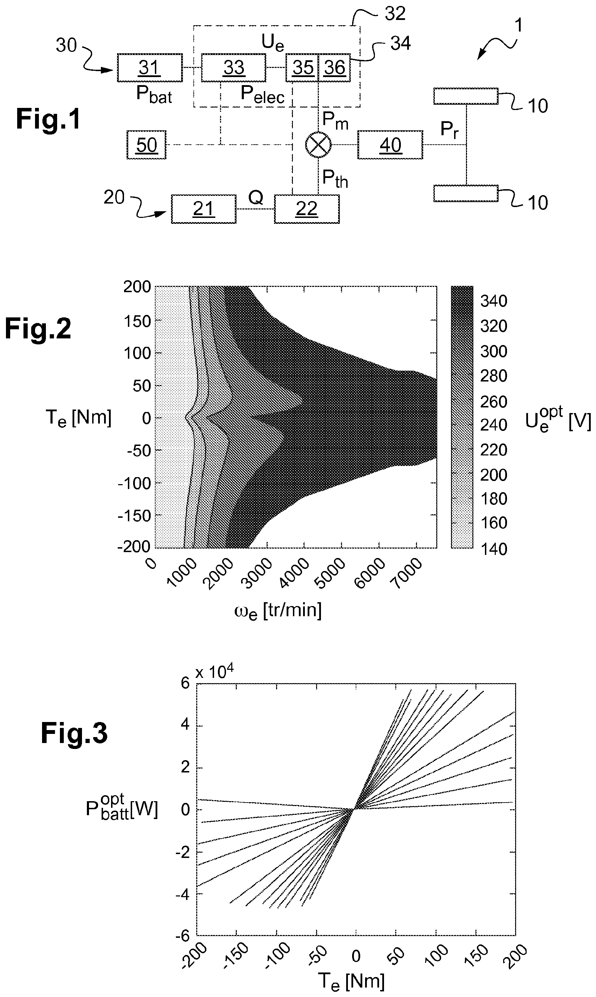

Comme le montre la figure 1, dans un véhicule automobile 1 de type hybride, le groupe motopropulseur hybride comporte une chaîne de traction thermique 20 et une chaîne de traction électrique 30.

La chaîne de traction thermique 20 comporte notamment un réservoir de carburant 21 et un moteur à combustion interne 22 qui est alimenté en carburant par le réservoir et dont l'arbre de sortie est couplé aux roues motrices 10 du véhicule automobile.

La chaîne de traction électrique 30 comporte quant à elle une batterie de traction 31, un dispositif de modulation de tension 33, un onduleur 35 et une (ou, en variante, plusieurs) machine électrique 36.

Le dispositif de modulation de tension 33 est ici un élévateur de tension connecté, en entrée, à la batterie de traction 31, et, en sortie, à l'onduleur 35.

L'onduleur 35 est conçu pour générer un courant alternatif à partir du courant continu reçu du dispositif de modulation de tension 33.

La machine électrique 36 est ici un moteur électrique dont l'arbre de sortie est couplé aux roues motrices 10 du véhicule automobile.

L'onduleur 35 et la machine électrique 36 sont ici combinés en un seul appareil 34.

Le dispositif de modulation de tension 33, l'onduleur 35 et la machine électrique 36 sont ici définis comme un « ensemble consommateur de courant 32 ».

Les deux chaînes de traction 20, 30 se rejoignent pour permettre d'entraîner en rotation les roues motrices 10 du véhicule automobile, via un dispositif de transmission 40.

Le véhicule automobile 1 comprend par ailleurs une unité électronique de commande (ou ECU pour "Electronic Control Unit"), appelée ici calculateur 50, permettant de commander les deux chaînes de traction précitées (notamment les puissances développées par la machine électrique 36 et par le moteur à combustion interne 22).

Le calculateur 50 comprend un processeur et une mémoire qui enregistre des données utilisées dans le cadre du procédé décrit ci-dessous.

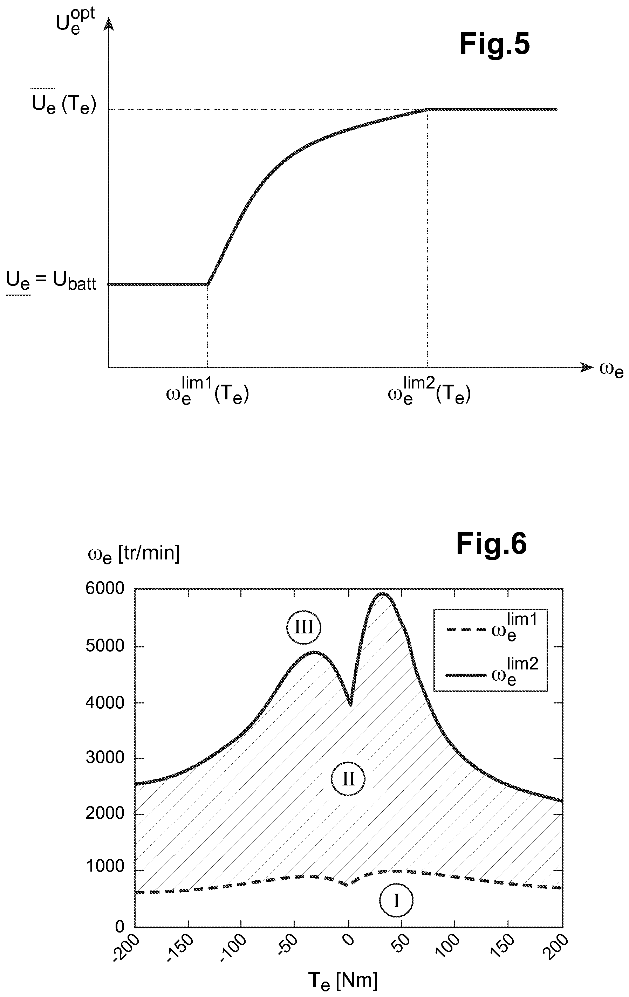

Cette mémoire enregistre notamment une cartographie du type de celle illustrée sur la figure 6 (qui sera détaillée dans la suite de cet exposé).

Elle enregistre également une application informatique, constituée de programmes d'ordinateur comprenant des instructions dont l'exécution par le processeur permet la mise en œuvre par le calculateur 50 du procédé décrit ci-après.

Pour la mise en œuvre de l'invention, le calculateur 50 est connecté à des capteurs.

Il est notamment connecté à des capteurs adaptés à mesurer les vitesses de rotation, c'est-à-dire les régimes, du moteur à combustion interne 22 et de la machine électrique 36.

Il est également connecté à un capteur permettant de déterminer dans quelle mesure le véhicule doit accélérer ou décélérer. Il peut s'agir d'un capteur mesurant la position de la pédale d'accélération du véhicule, ou d'un capteur mesurant la vitesse du véhicule (dans le cas où le véhicule doit suivre une consigne de vitesse imposée par le conducteur).

Le calculateur 50 est ainsi en mesure de déterminer la valeur d'une donnée relative à une énergie requise par le conducteur du véhicule pour faire avancer ce véhicule avec la dynamique souhaitée. On considérera ici que le calculateur 50 détermine plus précisément la valeur d'une puissance que les roues motrices 10 doivent recevoir, ci-après appelée « puissance aux roues $P_r$ ».

On pourra définir ici d'autres notions permettant de bien comprendre l'invention.

La valeur de la puissance électrique fournie par la batterie de traction 31 au dispositif de modulation de tension 33 sera ici appelée « puissance batterie $P_{bat}$ ».

La valeur de la puissance électrique fournie par le dispositif de modulation de tension 33 à l'onduleur 35 sera ici appelée « puissance électrique d'alimentation $P_{elec}$ ».

La valeur de la tension du courant électrique débité par le dispositif de modulation de tension 33 sera appelée « tension d'alimentation $U_e$ ».

La valeur de la puissance fournie par la seule machine électrique 32 aux roues motrices 10 sera ici appelée « puissance électromécanique $P_m$ ».

La valeur de la puissance fournie par le seul moteur à combustion interne 22 aux roues motrices 10 sera ici appelée « puissance thermomécanique $P_{th}$ ».

La consommation en carburant du moteur à combustion interne 22 sera appelée « débit de carburant Q ».

On appellera « facteur d'équivalence $\lambda$ de la batterie de traction 31 » le « coût énergétique » de l'énergie électrique stockée dans la batterie de traction 31, eu égard au coût de l'énergie thermique. Autrement formulé, le facteur d'équivalence est fonction de la valeur relative du coût de l'énergie électrique par rapport au coût de l'énergie thermique. Sa valeur sera choisie en fonction de ce que l'on privilégie plutôt la machine électrique 36 ou le moteur à combustion interne 22 pour propulser le véhicule automobile 1. Ce facteur d'équivalence s'exprime en g/Wh.

L'objet de l'invention consiste à déterminer la contribution que la machine électrique 36 et le moteur à combustion interne 22 doivent chacun apporter pour satisfaire la demande de puissance aux roues $P_r$ requise par le conducteur, tout en garantissant des pertes électriques minimum dans l'ensemble consommateur de courant 32. L'objectif est plus précisément alors de trouver la valeur de tension d'alimentation optimale $U_e^{opt}$ permettant de garantir cette réduction des pertes électriques.

Autrement formulé, l'objet du procédé qui sera ci-après décrit sera de trouver, en fonction de la valeur de la puissance aux roues $P_r$ requise, du régime $\omega_{th}$ du moteur à combustion interne 22 et du régime $\omega_e$ de la machine électrique 36, le triplet $\{U_e^{opt}, P_{th}^{opt}, P_m^{opt}\}$ qui garantit ces pertes électriques minimales (l'exposant « opt » signifiant qu'il s'agit de la valeur optimale).

Pour assurer une bonne compréhension de l'invention, le procédé permettant au calculateur 50 embarqué dans le véhicule automobile 1 d'aboutir au calcul du triplet $\{U_e^{opt}, P_{th}^{opt}, P_m^{opt}\}$ sera bien détaillé dans une première partie de l'exposé.

Dans une seconde partie de cet exposé, on pourra détailler le raisonnement qui aura permis d'aboutir à l'invention.

Dans la première partie, on peut donc décrire le procédé qui sera mis en œuvre par le calculateur 50 lorsque le véhicule automobile 1 sera démarré.

Ce procédé comporte cinq étapes majeures décrites ci-après, qui seront mises en œuvre de façon récursive, c'est-à-dire en boucle et à pas de temps réguliers.

Au cours d'une première étape, le calculateur 50 acquiert la puissance demandée aux roues $P_r$, compte tenu par exemple de la position de la pédale d'accélérateur du véhicule automobile.

Il acquiert également le régime $\omega_e$ de la machine électrique 36 et le régime $\omega_{th}$ du moteur à combustion interne 22, au moyen par exemple de capteurs de vitesse angulaire.

Il lit aussi dans sa mémoire la valeur du facteur d'équivalence $\lambda$ de la batterie de traction 31. Cette valeur est prédéterminée (ce qui signifie qu'elle est invariable d'un pas de temps à l'autre).

Au cours d'une seconde étape, le calculateur 50 calcule le couple électrique optimal $T_e^{opt}$ que la machine électrique 36 doit développer de façon à répondre aux besoins du conducteur, compte tenu principalement de la puissance demandée aux roues Pr et du facteur d'équivalence $\lambda$ (dont on rappelle qu'il est déterminant pour calculer la contribution de chaque chaîne de traction 20, 30 pour faire avancer le véhicule).

Pour cela, le calculateur 50 détermine tout d'abord la puissance électromécanique optimale $P_m^{opt}$. Il détermine ici cette puissance de façon analytique, en fonction du régime $\omega_{th}$ du moteur à combustion interne 22, de la puissance demandée aux roues Pr et du facteur d'équivalence $\lambda$.

Ici, il utilise pour cela la formule mathématique suivante :

$$P_m{}^{opt} = (a - \lambda.b_1) / (2.\lambda.b_2) \qquad [eq.1]$$

Dans cette formule, les données sont les suivantes :

$a = a_1$ si $P_r - P_m{}^{opt} \leq P_{lim}$ et $a = a_2$ si $P_r - P_m{}^{opt} > P_{lim}$
$b_1 = b_1{}^-$ et $b_2 = b_2{}^-$ si $P_m{}^{opt} \leq 0$ et $b_1 = b_1{}^+$ et $b_2 = b_2{}^+$ si $P_m{}^{opt} > 0$

avec :

$\lambda$ le facteur d'équivalence de la batterie de traction,
$\omega_e$ le régime de la machine électrique,
$P_r$ la puissance aux roues,
$P_{lim}$ une variable fonction du régime de la machine électrique, et
$a_1$, $a_2$, $b_1{}^-$, $b_2{}^-$, $b_1{}^+$, $b_2{}^+$ des constantes prédéterminées.

Puis, le calculateur en déduit analytiquement le couple électrique optimal $T_e{}^{opt}$, ici au moyen de la formule mathématique suivante :

$$T_e{}^{opt} = P_m{}^{opt} / \omega_e \qquad [eq.2]$$

Au cours d'une troisième étape, le calculateur 50 calcule de façon analytique la tension d'alimentation optimale $U_e{}^{opt}$ que le dispositif de régulation de tension 33 doit fournir de façon à minimiser les pertes électriques dans l'ensemble consommateur de courant 32.

Pour cela, le calculateur détermine tout d'abord, au moyen de la cartographie qu'il a en mémoire, la zone de fonctionnement dans laquelle la machine électrique 36 se trouve.

Sur la figure 6, on a représenté schématiquement un exemple de réalisation de cette cartographie, sur laquelle on observe trois zones I, II, III. Ces zones sont séparées les unes des autres par deux courbes $\omega_e{}^{lim1}$, $\omega_e{}^{lim2}$ qui correspondent à des seuils de régime $\omega_e$ de la machine électrique 36 et qui varient en fonction du couple électrique $T_e$.

Une fois la zone déterminée, si le régime $\omega_e$ est compris entre les deux bornes $\omega_e{}^{lim1}$, $\omega_e{}^{lim2}$ (zone II), la tension d'alimentation optimale $U_e{}^{opt}$ est calculée en fonction exclusivement dudit couple électrique optimal $T_e{}^{opt}$ et du régime $\omega_e$ de la machine électrique 36. Elle est plus précisément calculée selon la formule mathématique suivante :

$$U_e{}^{opt} = u_2 T_e{}^{opt}.\omega_e{}^2 + u_1 T_e{}^{opt}.\omega_e + u_0 T_e{}^{opt} \qquad [eq.3]$$

Dans cette équation, $u_0$, $u_1$, $u_2$ sont des fonctions prédéterminées (c'est-à-dire mémorisées dans la mémoire du calculateur 50), qui diffèrent d'un modèle de voiture à un autre.

En revanche, si le régime $\omega_e$ est inférieur aux deux seuils $\omega_e{}^{lim1}$, $\omega_e{}^{lim2}$ (zone I), la tension d'alimentation optimale $U_e{}^{opt}$ est considérée égale à la tension $U_{batt}$ aux bornes de la batterie de traction 31 (on écrit : $U_e = U_{batt}$).

Enfin, si le régime $\omega_e$ est supérieur aux deux seuils $\omega_e{}^{lim1}$, $\omega_e{}^{lim2}$ (zone III), la tension d'alimentation optimale $U_e{}^{opt}$ est considérée égale à un seuil de tension maximal $\overline{Ue}$ qui est prédéterminé et dont la valeur varie une fonction du couple électrique optimal $T_e{}^{opt}$. Cette variation du seuil de tension maximal $\overline{Ue}$ est prédéterminée sur banc d'essais, et elle est stockée dans la mémoire du calculateur 50.

Au cours d'une quatrième étape, le calculateur détermine analytiquement la puissance thermomécanique optimale $P_{th}{}^{opt}$ que le moteur à combustion interne 22 doit développer, en fonction de la puissance électromécanique optimale $P_m{}^{opt}$ et de la puissance demandée aux roues Pr, au moyen de la formule mathématique suivante :

$$P_{th}{}^{opt} = P_r - P_m{}^{opt} \qquad [eq.4]$$

Enfin, au cours d'une dernière étape, le calculateur 50 commande :

- le dispositif de modulation 33 de façon à ce qu'il délivre la tension d'alimentation optimale $U_e{}^{opt}$,
- l'onduleur 35 de façon à ce que la machine électrique 36 développe la puissance électromécanique optimale $P_m{}^{opt}$ et

le couple électrique optimal $T_e^{opt}$, et

- le moteur à combustion interne 22 de façon à ce qu'il développe la puissance thermomécanique optimale $P_{th}^{opt}$.

Ainsi ce procédé permet-il de bien répartir la puissance demandée à chacune des deux chaînes de traction 20, 30 et de garantir des pertes électriques réduites.

Dans une seconde partie de cet exposé, on peut maintenant décrire le raisonnement qui a permis d'aboutir au procédé décrit ci-dessus, ce raisonnement permettant de comprendre comment obtenir les différents coefficients apparaissant dans les équations précitées.

Pour cela, on peut tout d'abord décrire la façon ayant permis à la demanderesse d'aboutir à l'équation 3 de calcul de la tension d'alimentation optimale $U_e^{opt}$.

La méthode utilisée se base sur le principe du minimum de Pontriaguine. Ce principe s'applique à un opérateur mathématique particulier, à savoir à un Hamiltonien.

Cet Hamiltonien est ici défini comme une fonction, d'une part, du débit de carburant Q, et, d'autre part, du produit de la puissance électrique $P_{bat}$ consommée et du facteur de d'équivalence λ. Il s'exprime sous la forme suivante :

$$H_{hyb} = Q + \lambda . P_{bat} \qquad \text{[eq5]}$$

Selon le principe du minimum de Pontriaguine, cet Hamiltonien doit être minimisé afin de trouver les valeurs optimales recherchées.

On peut donc écrire :

$$U_e^{opt} = \arg\min_{Ue} H_{hyb} \qquad \text{[eq6]}$$

Ou encore :

$$U_e^{opt} = \arg\min_{Ue} P_{bat} \qquad \text{[eq7]}$$

Soit :

$$\frac{\partial P_{bat}}{\partial U_e} = 0 \qquad \text{[eq8]}$$

La résolution de cette équation de façon analytique étant complexe, la méthode a consisté à établir des mesures sur banc d'essais. C'est ainsi qu'a été établie une cartographie en deux dimensions des pertes électriques minimales en fonction de la tension optimale. Cette cartographie est représentée sur la figure 2.

Sur la figure 2, on a représenté cette cartographie avec, en abscisse, le régime $\omega_e$ de la machine électrique 36, en ordonnée, le couple électrique $T_e$ développé par cette machine électrique 36, et en niveaux de gris, la tension d'alimentation optimale $U_e^{opt}$ de la machine électrique 36 correspondant.

Sur la figure 3, on a représenté une autre cartographie établie de la même façon, avec, en abscisse, le couple électrique $T_e$ développé par la machine électrique 36 et en ordonnée, la puissance électrique optimale $P_{batt}^{opt}$ développée par la batterie électrique 31. Les courbes tracées correspondent à différents régimes $\omega_e$ de la machine électrique 36.

On comprend de la figure 2 qu'il est possible de déduire la tension d'alimentation optimale $U_e^{opt}$ en fonction uniquement du régime $\omega_e$ de la machine électrique 36 et du couple électrique $T_e$ développé par cette machine électrique 36.

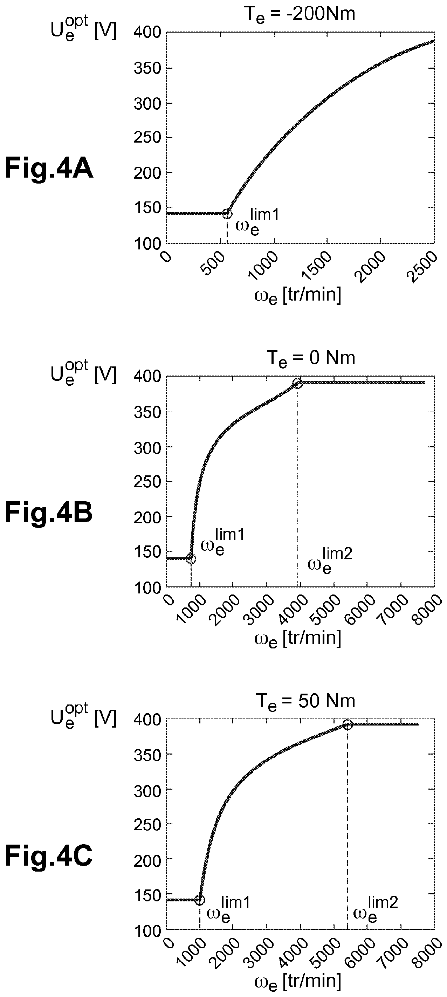

Sur les figures 4A à 4C, on a alors issues de la figure 2 trois courbes illustrant les variations de la tension d'alimentation optimale $U_e^{opt}$ en fonction uniquement du régime $\omega_e$ de la machine électrique 36, tracées pour trois couples électriques $T_e$ différents (-200Nm, 0Nm, 50Nm).

La demanderesse a alors observé que ces courbes présentent des formes homologues, si bien qu'il est possible de modéliser la variation de la tension d'alimentation optimale $U_e^{opt}$ en fonction du régime $\omega_e$ de la machine électrique 36 au moyen d'une courbe-modèle illustrée sur la figure 5. Comme le montre la figure 5, cette courbe-modèle présente deux seuils $\omega_e^{lim1}$ et $\omega_e^{lim2}$ de part et d'autre desquels la tension d'alimentation optimale $U_e^{opt}$ ne varie pas et entre lesquels cette tension varie.

La demanderesse a également observé qu'il était possible de modéliser les variations de ces deux seuils $\omega_e^{lim1}$ et $\omega_e^{lim2}$ par les courbes illustrées sur la figure 6.

La demanderesse a alors déterminé une équation d'interpolation de la courbe-modèle, qui est la suivante :

$$U_e{}^{opt} =$$

$$\begin{cases} U_{batt} & si\ \omega_e \in \left[0; \omega_e{}^{lim1}\left(T_e^{opt}\right)\right] \\ u_2\left(T_e^{opt}\right).\omega_e{}^2\ +\ u_1\left(T_e^{opt}\right).\omega_e\ +\ u_0\left(T_e^{opt}\right) & si\ \omega_e \in \left[\omega_e{}^{lim1}\left(T_e^{opt}\right); \omega_e{}^{lim2}\left(T_e^{opt}\right)\right] \\ \overline{U_e}(T_e^{opt}) & si\ \omega_e \in \left[\omega_e{}^{lim2}\left(T_e^{opt}\right); \overline{\omega_e}(T_e^{opt})\right] \end{cases}$$

$$[\text{eq.9}]$$

C'est donc de cette expression qu'est issue le calcul analytique de la tension d'alimentation optimale $U_e{}^{opt}$.

On y observe que les fonctions $u_0$, $u_1$, $u_2$, $\overline{\omega_e}$, $\omega_e{}^{lim1}$ et $\omega_e{}^{lim2}$ doivent toutes être obtenues sur banc d'essais.

Comme cela apparaît sur la figure 9 et comme cela a été décrit dans la première partie de cet exposé, pour calculer la tension d'alimentation optimale $U_e{}^{opt}$, il est nécessaire de connaître le couple électrique optimal $T_e{}^{opt}$.

Pour comprendre le raisonnement ayant permis à la demanderesse d'aboutir au procédé décrit dans la première partie, on peut fournir les informations suivantes.

On observe sur la figure 3 que la variation de la puissance batterie optimale $P_{batt}{}^{opt}$ par rapport au couple électrique optimal $T_e{}^{opt}$ présente un caractère convexe.

Or, la puissance électromécanique $P_m$ est égale au produit du couple électrique $T_e$ et du régime $\omega_e$.

Il est donc possible de modéliser analytiquement la variation de la puissance batterie optimale $P_{batt}{}^{opt}$ en fonction de la puissance électromécanique $P_m$, au moyen de la formule :

$$P_{batt}{}^{opt} = \begin{cases} b_2^-.P_m^2 + b_1^-.P_m + b_0 & si\ P_m \in \left[\underline{P_e}; 0\right] \\ b_2^+.P_m^2 + b_1^+.P_m + b_0 & si\ P_m \in \left[0; \overline{P_e}\right] \end{cases} \qquad [\text{eq.10}]$$

Ici encore, les différents coefficients apparaissant dans cette équation doivent être mesurés sur banc d'essai, et seront différents d'un groupe motopropulseur hybride à l'autre.

La méthode utilisée ensuite se base encore sur le principe du minimum de Pontriaguine, appliqué à l'opérateur Hamiltonien précité.

Selon le principe du minimum de Pontriaguine, cet Hamiltonien doit être minimisé afin de trouver les valeurs optimales recherchées.

On peut donc écrire :

$$P_m^{opt} = \arg\min_{Pm} H_{hyb} \qquad [\text{eq.11}]$$

Soit :

$$\frac{\partial H_{hyb}}{\partial P_m} = 0 \qquad [\text{eq.12}]$$

Alors, en modélisant de façon analytique le débit de carburant Q, comme cela est exposé dans l'équation eq.13 (ci-dessous), il est alors possible d'en déduire l'équation de la puissance électromécanique optimale $P_m{}^{opt}$ (équation eq.1).

$$Q(P_{th}) = \begin{cases} a_1.P_{th} + Q_0 & si\ P_{th} \in \left[P_{th,min}\ ;\ P_{lim}\right] \\ a_2.(P_{th} - P_{lim}) + Q_{lim} & si\ P_{th} \in \left[P_{lim}\ ;\ P_{th,max}\right] \end{cases} \qquad [\text{eq.13}]$$

Dans ce modèle, les coefficients $a_1$ et $a_2$ sont obtenus de façon expérimentale pour chaque modèle de véhicule automobile (en réalisant plusieurs tests sur le modèle de véhicule considéré et en estimant leurs valeurs par la méthode des moindres carrés).

Les paramètres $Q_0$, $Q_{lim}$, $P_{th,min}$, $P_{lim}$ et $P_{th,max}$ sont quant à eux des variables qui varient en fonction du régime $\omega_{th}$ du moteur à combustion interne 22.

Ces variables sont modélisées de la façon suivante :

$$Q_0(\omega_{th}) = q_2.\,\omega_{th}^2 + q_1.\,\omega_{th} + q_0,$$

$$Q_{lim}(\omega_{th}) = a_1.P_{lim} + Q_0(\omega_{th}),$$

$$P_{lim}(\omega_{th}) = p_1.\omega_{th} + p_0,$$

$$P_{th,max}(\omega_{th}) = k_1.\omega_{th} + k_0,$$

$$P_{th,min}(\omega_{th}) = -\,Q_0(\omega_{th})\,/\,a_1.$$

Dans cette modélisation, $q_0$, $q_1$, $q_2$, $p_0$, $p_1$, $k_0$ et $k_1$ sont des constantes obtenues de façon expérimentale pour chaque modèle de véhicule automobile.

## Revendications

1. Procédé de pilotage d'un dispositif de modulation (33) de la tension d'alimentation (Ue) d'un courant électrique qui est débité par une batterie de traction (31) d'un véhicule automobile (1) hybride et qui est fourni à une machine électrique (36) du véhicule automobile (1), ledit véhicule automobile (1) hybride comportant une chaîne de traction thermique (20) et une chaîne de traction électrique (30), le procédé comportant :

   - une étape de détermination d'un couple électrique optimal ($T_e^{opt}$) que la machine électrique (36) doit développer, en fonction d'une valeur d'énergie (Pr) demandée pour propulser le véhicule automobile (1) et d'un facteur d'équivalence ($\lambda$) associé à la batterie de traction (31), ledit facteur d'équivalence ($\lambda$) étant une fonction d'une valeur relative du coût d'une énergie électrique par rapport au coût d'une énergie thermique,
   - une étape de calcul analytique d'une tension d'alimentation optimale ($U_e^{opt}$) en fonction dudit couple électrique optimal ($T_e^{opt}$) et du régime ($\omega_e$) de la machine électrique (36), ladite tension d'alimentation optimale ($U_e^{opt}$) minimisant les pertes électriques dans un ensemble (32) comprenant au moins le dispositif de modulation (33) et la machine électrique (36), et
   - une étape de commande dudit dispositif de modulation (33) de façon à ce qu'il délivre ladite tension d'alimentation optimale ($U_e^{opt}$) **caractérisée en ce que** ledit couple électrique optimal ($T_e^{opt}$) est déterminé par calcul analytique, selon la formule :

   $$T_e^{opt} = (a - \lambda\,.\,b_1)\,/\,(2\,.\,\lambda\,.\,\omega_e\,.\,b_2),$$

   tels que :

   $a = a_1$ si $P_r - P_m^{opt} \leq P_{lim}$ et $a = a_2$ si $P_r - P_m^{opt} > P_{lim}$
   $b_1 = b_1^-$ et $b_2 = b_2^-$ si $P_m^{opt} \leq 0$ et $b_1 = b_1^+$ et $b_2 = b_2^+$ si $P_m^{opt} > 0$

   et où :

   $T_e^{opt}$ est le couple électrique optimal,
   $\omega_e$ est le régime de la machine électrique (36),
   $\lambda$ le facteur d'équivalence de la batterie de traction (31),
   $P_r$ la puissance aux roues,
   $P_{lim}$ une variable fonction du régime de la machine électrique (36), et
   $a_1$, $a_2$, $b_1^-$, $b_2^-$, $b_1^+$, $b_2^+$ des constantes prédéterminées.

2. Procédé de pilotage selon la revendication précédente, dans lequel, si le régime ($\omega_e$) est compris entre deux bornes ($\omega_e^{lim1}$ $\omega_e^{lim2}$) déterminées en fonction dudit couple électrique optimal ($T_e^{opt}$), ladite tension d'alimentation optimale ($U_e^{opt}$) est calculée en fonction exclusivement dudit couple électrique optimal ($T_e^{opt}$) et du régime ($\omega_e$) de la machine électrique (36).

3. Procédé de pilotage selon la revendication précédente, dans lequel, si le régime ($\omega_e$) est compris entre lesdites deux bornes ($\omega_e^{lim1}$ $\omega_e^{lim2}$ ladite tension d'alimentation optimale ($U_e^{opt}$) est calculée selon la formule :

$$U_e^{opt} = u_2(T_e^{opt}).\omega_e^2 + u_1(T_e^{opt}).\omega_e + u_0(T_e^{opt}),$$

où

$U_e^{opt}$ est la tension d'alimentation optimale,
$T_e^{opt}$ est le couple électrique optimal,
$\omega_e$ est le régime de la machine électrique (36),
$u_0$, $u_1$, $u_2$ sont des fonctions prédéterminées.

4. Procédé de pilotage selon l'une des deux revendications précédentes, dans lequel, si le régime ($\omega_e$) est inférieur auxdites deux bornes ($\omega_e^{lim1}$, $\omega_e^{lim2}$), ladite tension d'alimentation optimale ($U_e^{opt}$) est choisie égale à la tension ($U_{batt}$) aux bornes de la batterie de traction (31).

5. Procédé de pilotage selon l'une des deux revendications précédentes, dans lequel, si le régime ($\omega_e$) est supérieur auxdites deux bornes ($\omega_e^{lim1}$, $\omega_e^{lim2}$), ladite tension d'alimentation optimale ($U_e^{opt}$) est choisie égale à un seuil de tension maximal ($\overline{Ue}$) dont la valeur est une fonction du couple électrique optimal ($T_e^{opt}$).

6. Procédé de pilotage selon l'une des revendications précédentes, dans lequel ledit couple électrique optimal ($T_e^{opt}$) et ladite tension électrique optimale ($U_e^{opt}$) minimisent les pertes électriques dans ledit ensemble (32) si un hamiltonien ($H_{hyb}$), qui est fonction d'une consommation en carburant d'un moteur à combustion interne (22) du véhicule automobile (1) et d'une consommation en courant électrique dudit ensemble (32), est minimisé.

7. Procédé de pilotage selon l'une des revendications précédentes, dans lequel ladite valeur d'énergie (Pr) est une puissance demandée au niveau des roues motrices (10) du véhicule automobile (1).

8. Procédé de calcul d'une consigne de pilotage d'un groupe motopropulseur hybride de véhicule automobile (1), ledit groupe motopropulseur hybride comportant, d'une part, une machine électrique (36) qui est alimentée en courant par une batterie de traction (31), un dispositif de modulation (33) de tension et un onduleur (35), et d'autre part, un moteur à combustion interne (22) qui est alimenté en carburant par un réservoir (21), ledit procédé comprenant :

- une opération d'acquisition d'une valeur d'énergie (Pr) demandée pour propulser le véhicule automobile (1), d'un facteur d'équivalence ($\lambda$) associé à la batterie de traction (31), du régime ($\omega_{th}$) du moteur à combustion interne (22) et du régime ($\omega_e$) de la machine électrique (36),
- une opération de pilotage du dispositif de modulation (33) selon un procédé conforme à l'une des revendications précédentes, au cours duquel on calcule une première puissance ($P_m$) que la machine électrique (36) doit développer, en fonction dudit couple électrique optimal ($T_e^{opt}$) et du régime ($\omega_e$) de la machine électrique (36),
- une opération de calcul d'une seconde puissance ($P_{th}$) que le moteur à combustion interne (22) doit développer, en fonction de la première puissance ($P_m$) et de ladite valeur d'énergie (Pr), et
- une opération de commande de la machine électrique (36) et du moteur à combustion interne (22) de façon à ce qu'ils développent respectivement les première et seconde puissances ($P_m$, $P_{th}$).

**Patentansprüche**

1. Verfahren zur Steuerung einer Modulationsvorrichtung (33) der Versorgungsspannung (Ue) eines elektrischen Stroms, der von einer Traktionsbatterie (31) eines Hybrid-Kraftfahrzeugs (1) gefördert wird und die einer elektrischen Maschine (36) des Hybrid-Kraftfahrzeugs (1) bereitgestellt wird, wobei das Hybrid-Kraftfahrzeug (1) eine thermische Zugkette (20) und eine elektrische Zugkette (30) umfasst, wobei das Verfahren Folgendes umfasst:

- einen Schritt zur Bestimmung eines optimalen elektrischen Drehmoments ($T_e^{opt}$), das die elektrische Maschine (36) in Abhängigkeit von einem zum Antrieb des Kraftfahrzeugs (1) angeforderten Energiewert (Pr) und einem mit der Traktionsbatterie (31) verbundenen Äquivalenzfaktor ($\lambda$) entwickeln muss, wobei der Äquivalenzfaktor ($\lambda$) eine Funktion eines relativen Wertes der Kosten einer elektrischen Energie im Verhältnis zu den Kosten einer thermischen Energie ist,

- einen Schritt der analytischen Berechnung einer optimalen Versorgungsspannung ($U_e^{opt}$) in Abhängigkeit von dem optimalen elektrischen Drehmoment ($T_e^{opt}$) und der Drehzahl ($\omega_e$) der elektrischen Maschine (36), wobei die optimale Versorgungsspannung ($U_e^{opt}$) die elektrischen Verluste in einer Baugruppe (32) minimiert, die mindestens die Modulationsvorrichtung (33) und die elektrische Maschine (36) umfasst, und

- einen Schritt der Steuerung der Modulationsvorrichtung (33), so dass sie die optimale Versorgungsspannung ($U_e^{opt}$) liefert, **dadurch gekennzeichnet ist, dass** das optimale elektrische Drehmoment ($T_e^{opt}$) durch eine analytische Berechnung nach der folgenden Formel bestimmt wird:

$$T_e^{opt} = (a - \lambda.b_1) / (2.\lambda.\omega e. b_2),$$

wie beispielsweise:

$a = a_1$ si $P_r - P_m^{opt} \leq P_{lim}$ et $a = a_2$ si $P_r - P_m^{opt} > P_{lim}$
$b_1 = b_1^-$ et $b_2 = b_2^-$ si $P_m^{opt} \leq 0$ et $b_1 = b_1^+$ et $b_2 = b_2^+$ si $P_m^{opt} > 0$

und wobei:

$T_e^{opt}$ das optimale elektrische Drehmoment ist,
$\omega_e$ die Drehzahl der elektrischen Maschine (36) ist,
$\lambda$ der Äquivalenzfaktor der Traktionsbatterie (31),
$P_r$ die Leistung an den Rädern,
$P_{lim}$ eine drehzahlabhängige Variable der elektrischen Maschine (36), und
$a_1$, $a_2$ $b_1^-$, $b_2^-$, $b_1^+$, $b_2^+$ der vorgegebenen Konstanten.

2. Verfahren zur Steuerung nach dem vorhergehenden Anspruch, wobei, wenn die Drehzahl ($\omega_e$) zwischen zwei Klemmen ($\omega_e^{lim1}$, $\omega_e^{lim2}$) liegt, die in Abhängigkeit von dem optimalen elektrischen Drehmoment ($T_e^{opt}$) bestimmt werden, die optimale Versorgungsspannung ($U_e^{opt}$) ausschließlich in Abhängigkeit von dem optimalen elektrischen Drehmoment ($T_e^{opt}$) und der Drehzahl ($\omega_e$) der elektrischen Maschine (36) berechnet wird.

3. Verfahren zur Steuerung nach dem vorhergehenden Anspruch, wobei, wenn die Drehzahl ($\omega_e$) zwischen den beiden Klemmen ($\omega_e^{lim1}$, $\omega_e^{lim2}$) liegt, die optimale Versorgungsspannung ($U_e^{opt}$) nach der folgenden Formel berechnet wird:

$$U_e^{opt} = u_2 (T_e^{opt}).\omega_e^2 + u_1(T_e^{opt}).\omega_e + u_0(T_e^{opt}),$$

wobei

$U_e^{opt}$ die optimale Versorgungsspannung ist,
$T_e^{opt}$ das optimale elektrische Drehmoment ist,
$\omega_e$ die Drehzahl der elektrischen Maschine (36) ist,
$u_0$, $u_1$, $u_2$ vorgegebene Funktionen sind.

4. Verfahren zur Steuerung nach einem der beiden vorhergehenden Ansprüche, wobei, wenn die Drehzahl ($\omega_e$) unter den beiden Klemmen ($\omega_e^{lim1}$, $\omega_e^{lim2}$) liegt, die optimale Versorgungsspannung ($U_e^{opt}$) gleich der Spannung ($U_{batt}$) an den Klemmen der Traktionsbatterie (31) gewählt wird.

5. Verfahren zur Steuerung nach einem der beiden vorhergehenden Ansprüche, wobei, wenn die Drehzahl ($\omega_e$) größer ist als die beiden Klemmen ($\omega_e^{lim1}$, $\omega_e^{lim2}$ die optimale Versorgungsspannung ($U_e^{opt}$) gleich einer maximalen Spannungsschwelle gewählt wird, ($\overline{Ue}$) deren Wert eine Funktion des optimalen elektrischen Drehmoments ($T_e^{opt}$) ist.

6. Verfahren zur Steuerung nach einem der vorhergehenden Ansprüche, wobei das optimale elektrische Drehmoment ($T_e^{opt}$) und die optimale elektrische Spannung ($U_e^{opt}$) die elektrischen Verluste in der Baugruppe (32) minimieren, wenn ein Hamiltonian ($H_{hyb}$), der von einem Kraftstoffverbrauch eines Verbrennungsmotors (22) des Kraftfahrzeugs (1) und einem Stromverbrauch der Baugruppe (32) abhängt, minimiert wird.

7. Verfahren zur Steuerung nach einem der vorhergehenden Ansprüche, wobei der Energiewert (Pr) eine angeforderte Leistung an den Antriebsrädern (10) des Kraftfahrzeugs (1) ist.

8. Verfahren zur Berechnung eines Steuersollwerts eines Hybridantriebsstrangs eines Kraftfahrzeugs (1), wobei der Hybridantriebsstrang einerseits eine elektrische Maschine (36) umfasst, die von einer Traktionsbatterie (31) mit Strom versorgt wird, eine Modulationsvorrichtung (33) der Spannung und einen Wechselrichter (35) und andererseits einen Verbrennungsmotor (22), der von einem Tank (21) mit Kraftstoff versorgt wird, wobei das Verfahren Folgendes umfasst:

- einen Vorgang zur Erfassung eines zum Antrieb des Kraftfahrzeugs (1) angeforderten Energiewerts (Pr), eines mit der Traktionsbatterie (31) verbundenen Äquivalenzfaktors ($\lambda$), der Drehzahl ($\omega_{th}$) des Verbrennungsmotors (22) und der Drehzahl ($\omega_e$) der elektrischen Maschine (36),
- einen Vorgang zur Steuerung der Modulationsvorrichtung (33) nach einem Verfahren nach einem der vorhergehenden Ansprüche, bei dem eine erste Leistung ($P_m$) berechnet wird, die die elektrische Maschine (36) in Abhängigkeit von dem besagten optimalen elektrischen Drehmoment ($T_e^{opt}$) und der Drehzahl ($\omega_e$) der elektrischen Maschine (36) entwickeln muss,
- einen Vorgang der Berechnung einer zweiten Leistung ($P_{th}$), die der Verbrennungsmotor (22) in Abhängigkeit von der ersten Leistung ($P_m$) und dem Energiewert (Pr) entwickeln muss, und
- einen Vorgang zur Steuerung der elektrischen Maschine (36) und des Verbrennungsmotors (22), so dass sie jeweils die erste und zweite Leistung ($P_m$, $P_{th}$) entwickeln.

## Claims

1. Method for controlling a device (33) for modulating the supply voltage (Ue) of an electrical current that is supplied by a traction battery (31) of a hybrid motor vehicle (1) and that is provided to an electric machine (36) of the motor vehicle (1), said hybrid motor vehicle (1) including a thermal powertrain (20) and an electric powertrain (30), the method comprising:

- a step of determining an optimal electrical torque ($T_e^{opt}$) that the electric machine (36) must produce, according to an energy value (Pr) requested to propel the motor vehicle (1) and an equivalence factor ($\lambda$) associated with the traction battery (31), said equivalence factor ($\lambda$) being a function of a relative value of the cost of an electrical energy relative to the cost of a thermal energy,
- a step of analytical calculation of an optimal supply voltage ($U_e^{opt}$) according to said optimal electrical torque ($T_e^{opt}$) and the speed ($\omega_e$) of the electric machine (36), said optimal supply voltage ($U_e^{opt}$) minimising the electrical losses in an assembly (32) comprising at least the modulation device (33) and the electric machine (36), and
- a step of controlling said modulation device (33) so as to deliver said optimal supply voltage ($U_e^{opt}$) **characterised in that** said optimal electrical torque ($T_e^{opt}$) is determined by analytical calculation, according to the formula:

$$T_e^{opt} = (a - \lambda.b_1) / (2.\lambda.\omega e.b_2),$$

such that:

$a = a_1$ if $P_r - P_m^{opt} \leq P_{lim}$ and $a = a_2$ if $P_r - P_m^{opt} > P_{lim}$
$b_1 = b_1^-$ and $b_2 = b_2^-$ if $P_m^{opt} \leq 0$ and $b_1 = b_1^+$ and $b_2 = b_2^+$ if $P_m^{opt} > 0$

and where:

$T_e^{opt}$ is the optimal electrical torque,
$\omega_e$ is the speed of the electric machine (36),
$\lambda$ the equivalence factor of the traction battery (31),
$P_r$ the power at the wheels,
$P_{lim}$ a variable depending on the speed of the electric machine (36), and
$a_1$, $a_2$, $b_1^-$, $b_2^-$, $b_1^+$, $b_2^+$ predetermined constants.

2. Control method according to the preceding claim, wherein, if the speed ($\omega_e$) is between two limits ($\omega_e^{lim1}$, $\omega_e^{lim2}$) determined according to said optimal electrical torque ($T_e^{opt}$), said optimal supply voltage ($U_e^{opt}$) is calculated

exclusively as a function of said optimal electrical torque ($T_e{}^{opt}$) and the speed ($\omega_e$) of the electric machine (36).

3. Control method according to the preceding claim, wherein, if the speed ($\omega_e$) is between said two limits ($\omega_e{}^{lim1}$, $\omega_e{}^{lim2}$), said optimal supply voltage ($U_e{}^{opt}$) is calculated according to the formula:

$$U_e{}^{opt} = u_2 \, (T_e{}^{opt}).\omega_e{}^2 + u_1(T_e{}^{opt}).\omega_e + u_0(T_e{}^{opt}),$$

where

$U_e{}^{opt}$ is the optimal supply voltage,
$T_e{}^{opt}$ is the optimal electrical torque,
$\omega_e$ is the speed of the electric machine (36),
$u_0$, $u_1$, $u_2$ are predetermined functions.

4. Control method according to one of the two preceding claims, wherein, if the speed ($\omega_e$) is less than said two limits ($\omega_e{}^{lim1}$, $\omega_e{}^{lim2}$), said optimal supply voltage ($U_e{}^{opt}$) is chosen as equal to the voltage ($U_{batt}$) at the terminals of the traction battery (31).

5. Control method according to one of the two preceding claims, wherein, if the speed ($\omega_e$) is greater than said two limits ($\omega_e{}^{lim1}$ $\omega_e{}^{lim2}$), said optimal supply voltage ($U_e{}^{opt}$) is chosen as equal to a maximum voltage threshold ($\overline{Ue}$), the value of which is a function of the optimal electrical torque ($T_e{}^{opt}$).

6. Control method according to one of the preceding claims, wherein said optimal electrical torque ($T_e{}^{opt}$) and said optimal electrical voltage ($U_e{}^{opt}$) minimise the electrical losses in said assembly (32) if a Hamiltonian ($H_{hyb}$), which is a function of a fuel consumption of an internal combustion engine (22) of the motor vehicle (1) and an electrical current consumption of said assembly (32), is minimised.

7. Control method according to one of the preceding claims, wherein said energy value (Pr) is a power requested at the drive wheels (10) of the motor vehicle (1).

8. Method for calculating a setpoint for controlling a hybrid powertrain of a motor vehicle (1), said hybrid powertrain including, on the one hand, an electric machine (36) which is supplied with current by a traction battery (31), a voltage modulation device (33) and an inverter (35), and on the other hand, an internal combustion engine (22) which is supplied with fuel by a tank (21), said method comprising:

- an operation of acquiring an energy value (Pr) requested to propel the motor vehicle (1), an equivalence factor ($\lambda$) associated with the traction battery (31), the speed ($\omega_{th}$) of the internal combustion engine (22) and the speed ($\omega_e$) of the electric machine (36),
- an operation of controlling the modulation device (33) according to a method according to one of the preceding claims, during which a first power ($P_m$) that the electric machine (36) must produce is calculated according to said optimal electrical torque ($T_e{}^{opt}$) and the speed ($\omega_e$) of the electric machine (36),
- an operation of calculating a second power ($P_{th}$) that the internal combustion engine (22) must produce, according to the first power ($P_m$) and said energy value (Pr), and
- an operation of controlling the electric machine (36) and the internal combustion engine (22) so that they produce the first and second powers ($P_m$, $P_{th}$), respectively.

**Fig.1**

**Fig.2**

**Fig.3**

Fig.4A

$T_e$ = -200Nm

$U_e^{opt}$ [V]

$\omega_e^{lim1}$

$\omega_e$ [tr/min]

Fig.4B

$T_e$ = 0 Nm

$U_e^{opt}$ [V]

$\omega_e^{lim1}$

$\omega_e^{lim2}$

$\omega_e$ [tr/min]

Fig.4C

$T_e$ = 50 Nm

$U_e^{opt}$ [V]

$\omega_e^{lim1}$

$\omega_e^{lim2}$

$\omega_e$ [tr/min]

Fig.5

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8324856 B
- EP 2987673 A1
- EP 2849336 A1